# EUROPÄISCHE PATENTSCHRIFT

(11) **EP 0 813 263 B1**
(45) Veröffentlichungstag und Bekanntmachung des Hinweises auf die Patenterteilung: **06.09.2000**
(21) Anmeldenummer: 97107259.0
(22) Anmeldetag: 02.05.1997
(51) Int. Cl.: H01M 8/06, C01B 3/32

(54) **Verfahren zum Betrieb einer Anlage zur Wasserdampfreformierung von Methanol**
Process for operating a device for steam reforming of methanol
Procédé de fonctionnement d'un dispositif de reformage à la vapeur d'eau de méthanol

(30) Priorität: 15.06.1996 DE 19623919
(43) Veröffentlichungstag der Anmeldung: 17.12.1997
(73) Patentinhaber: XCELLSIS GmbH, 73230 Kirchheim / Teck-Nabern (DE)
(72) Erfinder: Wiesheu, Norbert, 89312 Günzburg (DE); Dülk, Christian, 97294 Unterpleichfeld (DE); Autenrieth, Rainer, 89155 Erbach (DE); Benz, Uwe, 88690 Uhldingen (DE)
(74) Vertreter: Kocher, Klaus-Peter

(56) Entgegenhaltungen:
- EP-A- 0 710 835
- EP-A- 0 813 262
- DE-A- 2 512 363
- US-A- 3 585 078
- PATENT ABSTRACTS OF JAPAN vol. 007, no. 094 (E-171), 20. April 1983 & JP 58 018881 A (MITSUI TOATSU KAGAKU KK), 3. Februar 1983

## Beschreibung

Die Erfindung bezieht sich auf ein Verfahren zum Betrieb einer Anlage zur Wasserdampfreformierung von Methanol nach dem Oberbegriff des Anspruchs 1.

Zum Betrieb derartiger Anlagen ist es bekannt, die in den Reformierungsreaktor eingeleitete Menge an aufbereitetem Wasserdampf/Methanol-Gemisch abhängig vom Lastzustand und Laständerung der Anlage variabel einzustellen. In der Auslegeschrift DE 1 949 184 und der Patentschrift DE 21 57 722 C2 ist zu diesem Zweck mit der Modifikation, daß dort Methan anstelle von Methanol verwendet wird, eine Strahlpumpe vorgesehen, deren Wasserdampfdurchfluß in Abhängigkeit vom Lastzustand der Anlage eingestellt wird, wodurch sich bei Lastwechsel auch der Methanzufluß entsprechend der Strahlpumpencharakteristik ändert.

In der Patentschrift US 5.401.589 ist ein Verfahren zum Betrieb eines Brennstoffzellensystems in einem Kraftfahrzeug mit einer den Brennstoffzellen vorgeschalteten Anlage zur Wasserdampfreformierung von Methanol zwecks Gewinnung des für die Brennstoffzellen benötigten Wasserstoffs offenbart. Um schneller als allein durch Änderung der Menge des in den Reformierungsreaktor eingeleiteten Wasserdampf/Methanol-Gemischs auf Lastwechsel reagieren zu können, sind dort einerseits eine Pufferbatterie und andererseits Sauerstoffreservoirs vorgesehen, aus denen bei erhöhtem Lastbedarf zusätzlicher Sauerstoff zur Einleitung in das Brennstoffzellensystem entnommen wird. Es ist aus dieser sowie anderen Druckschriften auch bekannt, daß bei zu geringer Wasserdampfkonzentration im Wasserdampf/Methanol-Gasgemisch bei dessen Reformierung eine erhöhte CO-Konzentration im Reformat entsteht. Dies ist insbesondere bei Verwendung des Reformats als Brennstoff in sogenannten PEM-Brennstoffzellen unerwünscht, da diese durch Kohlenmonoxid vergiftet werden. Üblicherweise wird daher das Wasserdampf/Methanol-Mischungsverhältnis im Bereich zwischen eins und zehn gehalten.

Beim Betrieb von Anlagen zur Wasserdampfreformierung von Methanol wird nun beobachtet, daß bei Lastwechsel, d.h. bei Veränderung der Menge an in den Reformierungsreaktor eingeleitetem Wasserdampf/Methanol-Gemisch, eine Änderung des Wasserdampf/Methanol-Mischungsverhältnisses auftritt, die aus einer momentanen Veränderung der Verdampfungsbedingungen in der Anlage resultiert. Dies wiederum führt zu Schwankungen in der CO-Konzentration des Reformats, wodurch zeitweise unerwünscht hohe CO-Konzentrationen auftreten können, die in einem nachgeschalteten Oxidator entfernt werden müssen.

Der Erfindung liegt als technisches Problem die Bereitstellung eines Verfahrens der eingangs genannten Art zugrunde, mit dem sich ein Auftreten unerwünschter CO-Konzentrationen im Reformat für beliebige Lastzustände der Anlage vermeiden läßt.

Die Erfindung löst dieses Problem durch die Bereitstellung eines Verfahrens mit den Merkmalen des Anspruchs 1. Bei diesem Verfahren wird das Wasserdampf/Methanol-Mischungsverhältnis des in der Gemischbereitungsstufe bereiteten und in den Reformierungsreaktor eingeleiteten Wasserdampf/Methanol-Gemischs abhängig vom Lastzustand derart eingestellt, daß eine über den gesamten Lastbereich hinweg gleichbleibende CO-Konzentration im Reformat erhalten wird. Dieses Einstellen des Wasserdampf/Methanol-Mischungsverhältnisses kann bei Bedarf durch eine reine kennlinienbasierende Steuerung oder durch eine entsprechende Regelung erfolgen. Das Konstanthalten der CO-Konzentration im Reformat verhindert unerwünschte CO-Spitzenwerte und ermöglicht eine vereinfachte Auslegung eines dem Reformierungsreaktor gegebenenfalls nachgeschalteten Gas-Reinigungsstufe, mit dem das unerwünschte Kohlenmonoxid entfernt wird. Das Verfahren leistet somit eine vorteilhafte Anpassung der jeweiligen Betriebsweise an die Belastung der Anlage zur Vermeidung erhöhter CO-Konzentrationen im Reformat.

Eine bevorzugte Ausführungsform der Erfindung wird nachfolgend anhand der Zeichnungen beschrieben, in denen zeigen:
- Fig. 1: ein Blockdiagramm einer Anlage zur Wasserdampfreformierung von Methanol,
- Fig. 2: ein Diagramm zur Veranschaulichung der Abhängigkeit des Wasserdampf/Methanol-Mischungsverhältnisses von der Anlagenbelastung und
- Fig. 3: ein Diagramm zur Veranschaulichung der Abhängigkeit der CO-Konzentration im Reformat von der Anlagenbelastung.

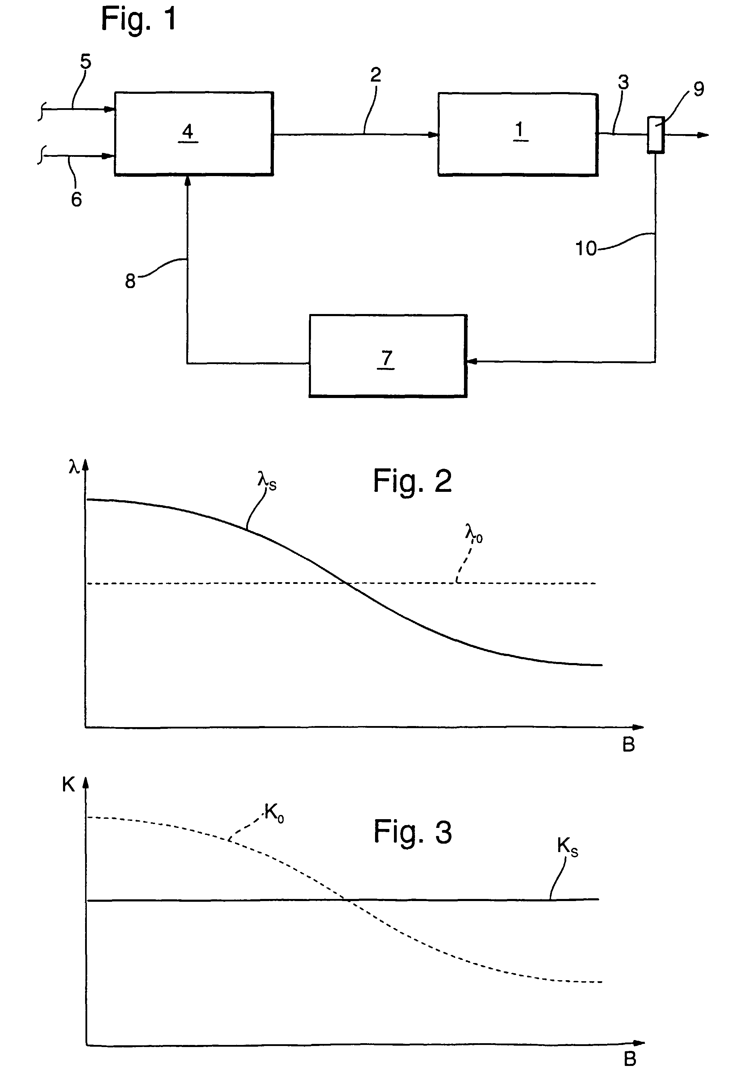

Die in Fig. 1 nur mit ihren vorliegend relevanten Komponenten gezeigte Anlage zur Wasserdampfreformierung von Methanol ist beispielsweise in einem brennstoffzellenbetriebenen Kraftfahrzeug einsetzbar, um Wasserstoff für die Speisung der Brennstoffzellen bereitzustellen. Als Herzstück enthält die Anlage einen Reformierungsreaktor (1), der aus einem eingangsseitig zugeführten Wasserdampf/Methanol-Gemisch (2) ein Reformat (3) erzeugt und abgibt, das den gewünschten Wasserstoff sowie einen unerwünschten Anteil an Kohlenmonoxid enthält, das beispielsweise eine nachgeschaltete PEM-Brennstoffzellenanordnung vergiften könnte und daher in einer dem Reformierungsreaktor (1) nachgeschalteten, nicht gezeigten Stufe in Kohlendioxid umgewandelt oder vom Wasserstoff separiert wird.

Das in den Reformierungsreaktor (1) eingeleitete Wasserdampf/Methanol-Gemisch (2) wird in einer Gemischbereitungsstufe (4) bereitet, wozu dieser Stufe (4) über eine Methanolzuführungsleitung (5) Methanol und über eine Wasserzuführungsleitung (6) Wasser zugeführt wird. Dabei können zuerst die flüssigen Komponenten gemischt und dann zusammen verdampft bzw. überhitzt oder alternativ zunächst die beiden Bestandteile getrennt verdampft und anschließend gemischt werden. Der Betrieb der Anlage wird von einer Steuer- oder Regeleinheit (7) durchgeführt. Der Aufbau des Reformierungsreaktors (1), der Gemischbereitungsstufe (4) und der Steuer- oder Regeleinheit (7) entspricht herkömmlichen Realisierungen dieser Komponenten, so daß hierauf nicht näher eingegangen zu werden braucht.

Die Steuer- oder Regeleinheit (7) empfängt eine Lastinformation, beispielsweise von einem Sensor (9), über eine Meßleitung (10) und steuert abhängig davon die Komponenten der Gemischbereitungsstufe (4) über einen Steuerleitungssatz (8) in spezieller, nachfolgend erörterter Weise an.

Die Ansteuerung der Gemischbereitungsstufe (4) erfolgt zum einen entsprechend der herkömmlichen Vorgehensweise so, daß die Menge an bereitetem Wasserdampf/Methanol-Gemisch mit festgestellter, ansteigender oder absinkender Belastung erhöht bzw. erniedrigt wird. Ohne weitere Maßnahmen würde dies bedeuten, daß unabhängig von der jeweiligen Belastung der Anlage abgesehen von eventuellen kurzzeitigen Schwankungen ein konstantes Wasserdampf/Methanol-Mischungsverhältnis beibehalten würde. Im Diagramm von Fig. 2, welches das Wasserdampf/Methanol-Mischungsverhältnis (λ) in Abhängigkeit von der Belastung (B) der Anlage wiedergibt, ist dies durch die zugehörige horizontale Mischungsverhältnis-Kennlinie (λ₀) repräsentiert. Für diese herkömmliche Betriebsweise wird ein in Abhängigkeit von der Belastung nicht konstant bleibender Verlauf der CO-Konzentration im Reformat beobachtet. Im Diagramm von Fig. 3, welches die CO-Konzentration (K) im Reformat als Funktion der Belastung (B) wiedergibt, ist dieser nicht konstante Verlauf anhand der zugehörigen, gestrichelten Konzentrationskennlinie (Kₒ) repräsentiert. Dieser nicht konstante Velauf der CO-Konzentration (Kₒ) in Abhängigkeit von der Belastung (B) erschwert eine eventuelle, anschließende Umwandlungsreaktion des Kohlenmonoxids in Kohlendioxid und führt zudem im Bereich geringer Anlagenbelastung zu vergleichsweise hohen CO-Konzentrationen im Reformat.

Hier schafft die erfindungsgemäßes Betriebsweise der Anlage Abhilfe. Dazu ist in der Steuer- oder Regeleinheit (7) eine in Fig. 3 durchgezogen gezeichnete Kennlinie (λₛ) für den einzustellenden Sollwert des Wasserdampf/Methanol-Mischungsverhältnisses in Abhängigkeit von der Anlagenbelastung (B) vorgegeben. Diese Mischungsverhältnis-Kennlinie (λₛ) ist so gewählt, daß sich bei Einhaltung dieses Sollwertes über den gesamten Belastungsbereich der Anlage hinweg ein konstanter Verlauf (Kₛ) der CO-Konzentration im Reformat ergibt, wie in Fig. 3 am zugehörigen, horizontalen Kennlinienverlauf zu erkennen. Die somit unabhängig von einer sich verändernden Anlagenbelastung gleichbleibende CO-Konzentration im Reformat (3) erleichtet eine anschließende CO-Oxidation und ermöglicht einen einfachen Aufbau eines hierzu verwendeten CO-Oxidators. Außerdem werden im Vergleich zur herkömmlichen Betriebsweise ohne belastungsabhängiger Veränderung des Wasserdampf/Methanol-Mischungsverhältnisses im Bereich geringerer Belastungen merklich kleinere CO-Konzentrationen im Reformat (3) erzielt.

Insgesamt läßt sich auf diese Weise bei relativ einfacher Systemauslegung ein hoher Wirkungsgrad für die Wasserstoffgewinnung mittels Wasserdampfreformierung von Methanol erzielen. Zur Einfachheit des Systems trägt zudem bei, daß das Wasserdampf/Methanol-Mischungsverhältnis, wie beschrieben, mittels einer reinen Steuerung auf den jeweils zur Konstanthaltung der CO-Konzentration im Reformat erforderlichen Wert eingestellt wird, ohne daß es zwingend einer Regelung bedarf. Es versteht sich jedoch, daß die Konstanthaltung der CO-Konzentration gegebenenfalls auch durch eine Regelung bewirkt werden kann, bei der das Wasserdampf/Methanol-Mischungsverhältnis durch geeignete Stellsignale für die Komponenten der Gemischbereitungsstufe (4) abhängig von der Differenz zwischen dem konstant vorgegebenen CO-Konzentrationssollwert und dem von einer entsprechend vorzusehenden Sensorik gemessenen Istwert der CO-Konzentration im Reformat (3) geeignet verändert wird. In jedem Fall wird erfindungsgemäß der jeweilige Sollwert des Wasserdampf/Methanol-Mischungsverhältnisses an die momentane Belastung der Anlage angepaßt und auf diese Weise die Anlagenbetriebsweise so eingestellt, daß die CO-Konzentration im Reformat am Ausgang des Reformierungsreaktors konstant bleibt.

## Patentansprüche

1. Verfahren zum Betrieb einer Anlage zur Wasserdampfreformierung von Methanol, bei dem
- in einer Gemischbereitungsstufe aus Wasser und Methanol ein Wasserdampf/Methanol-Gemisch bereitet und
- das bereitete Wasserdampf/Methanol-Gemisch (2) in einer vom Lastzustand der Anlage abhängigen Menge in einen Reformierungsreaktor (1) eingeleitet wird,
**dadurch gekennzeichnet, daß**
- das Wasserdampf/Methanol-Mischungsverhältnis (λ) des in den Reformierungsreaktor (1) eingeleiteten Wasserdampf/Methanol-Gemischs (2) abhängig vom Lastzustand (B) der Anlage derart eingestellt wird, daß eine über den gesamten Lastbereich hinweg gleichbleibende CO-Konzentration (Kₛ) im Reformat (3) erhalten wird, indem es von einer Steuer- oder Regeleinheit (7) auf einen in Abhängigkeit von der Anlagenbelastung in Form einer Kennlinie konstanter CO-Konzentration vorgegebenen Sollwert gesteuert oder in Abhängigkeit von der Differenz zwischen einem konstant vorgegebenen CO-Konzentrations-Sollwert und dem von einer entsprechenden Sensorik gemessenen CO-Konzentrations-Istwert im Reformat geregelt wird.

## Claims

1. A process for the operation of a device for the steam reforming of methanol in which
- a steam/methanol mixture is prepared from water and methanol in a mixture preparation stage and
- a volume of the prepared steam/methanol mixture (2) dependent upon the load status of the device is introduced into a reforming reactor (1),
**characterised in that**
- the steam/methanol mixture ratio (λ) of the steam/methanol mixture (2) introduced into the reforming reactor (1) is set in accordance with the load status (B) of the device in such a manner that a CO concentration (Ks) which remains constant over the whole load range is obtained in the reformate (3) by controlling it using a control or regulating unit (7) in accordance with a reference value pre-set in dependence upon the device load in the form of a characteristic line of a constant CO concentration or regulating it in dependence upon the difference between a constant pre-set CO concentration reference value and the actual level of CO concentration in the reformate measured by means of an appropriate sensor.

## Revendications

1. Procédé de fonctionnement d'une installation de reformage à la vapeur d'eau à partir de méthanol, dans lequel
- on prépare un mélange vapeur d'eau/méthanol à partir d'eau et de méthanol, dans un étage de préparation de mélange, et
- le mélange vapeur d'eau/méthanol (2) préparé est introduit, en une quantité dépendant de l'état de charge de l'installation, dans un réacteur de reformage (1),
caractérisé en ce que
- le rapport de mélange vapeur d'eau/méthanol (λ) du mélange vapeur d'eau/méthanol (2) introduit dans le réacteur de reformage (1) est réglé, en fonction de l'état de charge (B) de l'installation, de manière à obtenir dans le réformat (3) une concentration en CO (K_{E}) constante sur l'ensemble de la plage de charge, en ce que, par une unité de commande ou de régulation (7), on commande pour suivre une valeur de consigne, prédéterminée en fonction de la charge de l'installation, sous la forme d'une caractéristique de concentration en CO constante, ou bien ou gégule, en fonction de la différence entre une valeur de consigne de concentration CO, prédéterminée et constante, et la valeur réelle de la concentration en CO dans le réformat, mesurée par une sensorique correspondante.
